# EUROPEAN PATENT SPECIFICATION

(11) **EP 4 008 513 B1**
(45) Date of publication and mention of the grant of the patent: **10.05.2023**
(21) Application number: 20211679.4
(22) Date of filing: 03.12.2020
(51) Int. Cl.: B29C 43/46, B29C 43/34, B29D 30/38, B29C 70/50, B29C 70/88, B29C 70/20, B29D 29/00, B29K 21/00, B29K 305/00, B29C 65/70, B29C 43/28, B29K 105/10

(54) **COMBINED MACHINE OR LINE FOR CALENDERING A RUBBERED SHEET WITH A TEXTILE OR METAL INTERMEDIATE AND METHOD OF CHANGING THE INTERMEDIATE LAYER IN SUCH A MACHINE**
KOMBINIERTE MASCHINE ODER LINIE ZUM KALANDRIEREN EINER GUMMIERTEN BAHN MIT EINEM TEXTIL- ODER METALLZWISCHENPRODUKT UND VERFAHREN ZUM WECHSELN DER ZWISCHENLAGE IN SOLCH EINER MASCHINE
MACHINE COMBINÉE OU LIGNE DE CALANDRAGE D'UNE FEUILLE CAOUTCHOUTÉE AVEC UN INTERMÉDIAIRE TEXTILE OU MÉTALLIQUE ET PROCÉDÉ DE CHANGEMENT DE COUCHE INTERMÉDIAIRE DANS UNE TELLE MACHINE

(43) Date of publication of application: 08.06.2022
(73) Proprietor: Rodolfo Comerio Srl, 21058 Solbiate Olona (VA) (IT)
(72) Inventor: COMERIO, Carlo, 21058 Solbiate Olona (VA) (IT)
(74) Representative: M. Zardi & Co S.A.

(56) References cited:
- EP-A1- 0 421 803
- EP-A1- 3 124 196
- JP-A- 2015 160 347
- US-A1- 2009 249 598
- US-A1- 2009 266 476
- US-A1- 2018 326 625

## Description

### Field of application

The invention relates to the field of calender machines for manufacturing in continuous mode a multilayer semi-finished sandwich product comprising two layers of elastomer applied to a textile or metallic intermediate support layer. The invention in particular relates to a combined machine or line, a term denoting a machine or line that can be configured to operate with a textile intermediate layer and with a metallic intermediate layer.

### Prior art

Lines and processes are known for continuous production of a sheet formed by two layers of elastomer with an interposed textile or metallic intermediate layer. An apparatus disclosing the preamble of claim 1 is known for example from US 2009/249598 A1.

The textile or metallic intermediate layer has the function of support element. The sandwich thus obtained is used in the industry mainly to make cords for tyres but also for other applications such as conveyor belts, drive belts, etc.

The elastomeric material is applied on the intermediate layer in a group of cylinders with parallel axes which comprises two so-called working cylinders and two counter-cylinders arranged to spread the elastomeric material on the surface of the working cylinders.

A respective counter-cylinder is associated with each working cylinder. The counter-cylinder essentially serves to plasticise and apply the elastomer in the form of a sheet with uniform thickness on the surface of the respective working cylinder. Following this operation it is commonly said that the surface of the working cylinder has been "rubbered". The group of cylinders comprising the working cylinders and the counter-cylinders can be termed calendering group.

The working cylinders are generally placed vertically one above the other, so that an upper working cylinder and a lower working cylinder are distinguished.

The intermediate layer is suitably guided to pass in the narrow (gap) space existing between the two "rubbered" working cylinders. In this way the working cylinders exert a pressure and transfer the elastomer sheet onto the intermediate layer obtaining the desired semi-finished sandwich product which is then wound into a roll.

Each type of intermediate layer, either textile or metallic, has its own features and criticalities within the process, in particular related to the manner in which it must be conveyed to the calendering group.

The textile intermediate layer is usually a fabric made predominantly of warp yarns aligned and closely arranged to each other; the weft is reduced to the minimum necessary to retain the warp yarns. Due to this structure, the textile intermediate layer tends to easily shrink in the width direction and a challenge encountered in its handling consists in keeping the proper width of the layer and distance of the warp yarns.

For this reason, the textile intermediate layer is transported towards the calendering group by passing around suitable expansion cylinders. For example, it is known to convey the textile layer around curved "banana-shaped" cylinders which tend to expand the textile layer thanks to their curvature.

Furthermore, it is known a tendency of the edge yarns to compact which generally requires a subsequent passage through edge adjusting devices, typically a left device and a right device, that wrap the intermediate layer around a series of small cylinders to suitably stretch the edges and adjust the arrangement of the warp yarns.

Downstream of these settling cylinders, the intermediate textile layer passes around a cylinder called drawing-in cylinder designed for stretching out and appropriately directing the intermediate layer towards the gap interspace between the two working cylinders. Typically, said drawing-in cylinder is placed at a short distance from the lower working cylinder and below the gap area.

The metallic intermediate layer is essentially composed of a large number of metallic wires (metallic "tassel") having a small diameter. Each of said wires typically has a diameter of about 1 mm, for example 0.8 mm to 1.2 mm, and the distance between adjacent wires is about equal to the diameter. The width of the product is generally about 1 meter which means the number of the wires is in the order of several hundreds, for example in normal applications there can be about 500 to 1000 wires. This gives an idea of the delicate and complex handling of the metallic intermediate layer.

To ensure the metal wires are correctly aligned, parallel and spaced apart during the application of the elastomer, the metallic intermediate layer is passed around a pair of cylinders, called wire setting cylinders, which are designed to sort and properly adjust the arrangement of the wires. To carry out this task, the surface of said wire setting cylinders presents a dense grooving composed of a series of circumferential grooves or slots, each for accommodation of one of the wires.

The second wire setting cylinder must be placed very close to a working cylinder, which also in this case is usually represented by the lower working cylinder. In practice, the second wire setting cylinder is placed, at the operator's choice, in direct contact or in close proximity to the working cylinder. In this way, as soon as the metallic layer leaves the wire setting cylinder it immediately finds the rubbered working cylinder to receive the elastomer sheet. Otherwise the effect of sorting the metal wires would be lost in the path between the wire setting cylinder and the working cylinder.

Furthermore, it should be noted that the number and size of the grooves on the surface of the grooved cylinders shall match the number and diameter of the wires; consequently each type of metallic intermediate layer requires an appropriate pair of wire setting cylinders, and for operation with different types of metallic intermediate layer an easy and fast way must be provided for replacing said cylinders.

The term combined line denotes a line designed to operate with both a textile intermediate layer and with a metallic intermediate layer. In the realization of these lines it is necessary to face the problem of shifting from the production with a textile intermediate layer to the production with a metal intermediate layer and the other way around ensuring in both cases the correct path of the intermediate layer towards the rubbering group.

In summary, a combined line must be configurable for:
a) conveying an intermediate textile layer towards a working cylinder, for example the lower working cylinder, by passing it around the appropriate expansion cylinders and edge adjusting cylinders, and then around the drawing-in cylinder;
b) conveying a metallic intermediate layer towards the same working cylinder by passing it around the two wire setting cylinders, the second of which must be placed very close to, or in contact with, the working cylinder.

In a combined line there is the need to pass from condition a) to condition b) and the opposite in a short time without compromising the quality of the finished product and without wasting material.

Currently the combined lines have fully separate paths for the two types of intermediate layer. For example in a classic embodiment the expansion cylinders and adjusting cylinders of the textile layer are mounted in the upper part of the line and, as a result of this arrangement, the textile intermediate layer is directed towards its own drawing-in cylinder with a path directed substantially from top to bottom. The metallic intermediate layer, on the other hand, does not need to pass through said expansion cylinders and is generally directed towards the wire setting cylinders following a path from bottom to top. When the intermediate layer is to be changed, a joining press provides the junction between the intermediate layer currently in use in the machine and the new intermediate layer to be used. In the lines of the prior art, the above described textile expansion cylinders are located downstream of said joining press.

However this solution is not satisfactory. The change of the intermediate layer is still a laborious and a relatively time-consuming operation. The downtime for the change represents a loss of production and therefore a cost. The different path of the two intermediate layers makes the machine more complex.

The format change operation is even more time consuming and laborious when it includes the replacement of the grooved wire setting cylinders. In particular, the second wire setting cylinder, in proximity of the calendering group, has a considerable diameter and weight and is problematic to handle. Generally, it is envisaged to extract said cylinder from above but extraction from above is not possible in the known combined machines while the machine is still running with the textile intermediate layer, because the grooved cylinder is located under the intermediate layer. Therefore it is not possible to prepare in advance the wire setting cylinders (while production with the textile intermediate layer is still running) which increases the downtime of the change.

Another problem is represented by the waste of material. The intermediate layer which is located between the joining press and the calendering group represents a waste which is lost during the format change operation. Obviously, there is an incentive to reduce this waste.

### Summary of the invention

The invention aims to respond to the aforementioned need. The invention in particular aims to make an easier and faster passage from textile intermediate layer to the metallic intermediate layer, and the other way around, in a combined line of the type considered herein. A further object of the invention is to facilitate the replacement of the metal wire setting cylinders of the metallic intermediate layer, in particular of the second metal wire setting cylinder when necessary.

The object is achieved with a combined machine or line according to claim 1.

The machine is equipped with a movable cylinder-carrying support on which the drawing-in cylinder of the textile intermediate layer and the second wire setting cylinder of the metallic intermediate layer are mounted. Said movable support can be arranged in a first position in which said two cylinders are suitably positioned for the production with a textile intermediate layer, and in a second position in which said two cylinders are positioned for the production with a metallic intermediate layer.

When the support is in the first position, the drawing-in cylinder (for the textile layer) is in its drawing-in position of the textile intermediate layer and the second wire setting cylinder (for the metallic intermediate layer) is in a idle or standby position distanced from the working cylinders. When the support is in the second position the second wire setting cylinder is in its operative position adjacent to one of the working cylinders that apply the elastomer, and the drawing-in cylinder is in a idle position suitably distanced from the path of the intermediate layer.

The mobile support and the two cylinders associated therewith (fabric drawing-in and second wire setting cylinder of the metal wires) are located above the path of the intermediate layer, both in the case of the textile intermediate layer and in the case of the metallic intermediate layer.

The machine can comprise one or more movable diverting cylinders placed along the path of the intermediate layer towards the calendering group. The intermediate layer, be it textile or metallic, may pass around said movable diverters. Each of said movable diverters can move to a first position to define the path of the textile intermediate layer and to a second position to define the path of the metallic intermediate layer.

A noticeable feature of the invention is that the textile intermediate layer and the metallic intermediate layer follow similar or substantially coincident paths in a section which extends from a joining press up to the calendering group. In this way, the disadvantages deriving from having different paths are overcome.

The paths of the intermediate layers mainly differ in the interaction with a width adjustment section (which is necessary for the textile layer but not for the metal layer) and in the proximity of the calendering group.

In the area proximal to the calendering group, the textile intermediate layer needs a drawing-in cylinder placed at a certain distance from the working cylinders, while the metallic intermediate layer needs the wire-setting cylinders wherein in particular the second thereof must be practically in contact with a working cylinder.

In some embodiments the positioning of the movable diverting cylinders allows to determine: a) a path of the textile intermediate layer which interacts with said width adjustment section and with the respective devices (for example expansion cylinders and edge adjusting cylinders); b) a path of the metallic intermediate layer which substantially does not interact with said width adjustment section so that said section remains in idle condition while the production is made with the metallic intermediate layer.

In an embodiment of the invention the expansion devices of the textile intermediate layer are positioned upstream of a joining press that can be used, during the change of intermediate layer, to make a joint between the intermediate layer in use and the new intermediate layer. By arranging the textile expanding section upstream of said press, it is obtained that the paths of the two intermediate layers substantially coincide in the section downstream of said press, towards the calendering group.

Thanks to the invention, the machine can shift from a setup for operation with a textile intermediate layer to a setup for operation with a metallic intermediate layer by suitably arranging the various movable members (diverters and cylinder-holders) described above. Said movable members are preferably provided with a controlled movement having a suitable actuation, for example hydraulic. The term movable diverting cylinders means that the axis of said diverting cylinders can be displaced respect to the frame of the machine, for example with a straight or curved path.

The invention also relates to a method, as defined in the attached claims, for passing from the production with a textile intermediate layer to the production with a metallic intermediate layer or the other way around in a combined machine of the type described herein.

The invention facilitates and streamlines the operation of changing the intermediate layer by allowing to pass from one intermediate layer to the other in a time much shorter than the time needed by the conventional machines.

Another great advantage is that the invention facilitates the replacement of the wire setting cylinders, in particular of the second cylinder in a position proximal to the calendering group. Thanks to the invention, during production with a textile intermediate layer the second wire setting cylinder is located above the intermediate layer and, if necessary, can be removed by lifting from above and replaced with another cylinder with a different surface groove.

A particular embodiment provides that one or both of the wire setting cylinders can be extracted laterally. To this purpose, one or both of the wire setting cylinders can be mounted on suitable sliders. The lateral extraction can further facilitate the change as it does not require accessing the inside of the machine from above with lifting hoists.

### Preferred embodiments

For the sake of brevity, a textile or metallic intermediate layer will also be referred to the terms "fabric" or "textile" and "metal".

The movable support, which carries the fabric drawing-in cylinder and the second wire setting cylinder, is preferably rotatable around a fulcrum axis which is parallel to the axes of said two cylinders. It should be noted for the machines of the type herein considered the various cylinders in contact with the product are all with parallel axes, therefore a common direction of the axes of the cylinders is identified.

Said fulcrum axis is advantageously positioned so that it does not belong to a plane containing the axes of said two cylinders, then the two cylinders are substantially in eccentric positions relative to the fulcrum axis. The two cylinders mounted on the support move between the respective working and standby positions by revolving around said fulcrum axis of the support. It can be said that said two cylinders "orbit" relative to the fulcrum axis of their common support.

Thanks to the positioning described above the rotation of the support produces the desired repositioning of the drawing-in cylinder for the textile layer and of the second wire setting cylinder for the metallic layer, relative to the cylinders of the calendering group. In the textile production set-up, the drawing-in cylinder is at the correct distance from the working cylinders and at the same time there is a free space above and around the wire setting cylinder which facilitates the possible replacement thereof; in the metal production setup, the wire setting cylinder moves close to the lower working cylinder.

Preferably, in a transverse section, the lines joining the fulcrum of rotation of the support with the centre of the drawing-in cylinder and with the centre of the second wire setting cylinder form an angle of 90 degrees or of about 90 degrees. For example, said lines form an angle between 80 and 100 degrees. For example, the drawing-in cylinder and the second wire setting cylinder are supported by suitable supports or shoulders arranged essentially in an L-shape.

Preferably when the support is in the first position (production with textile) the drawing-in cylinder is located under the second wire setting cylinder, and when the support is in the second position (production with metal) the drawing-in cylinder, at rest, is located above the second wire setting cylinder.

The two working cylinders of the calendering group are generally vertically arranged, thus there is an upper working cylinder and a lower working cylinder. Preferably, when the movable support is in the second working position with a metal intermediate layer, the second wire setting cylinder is very close to the lower working cylinder or in contact with said lower working cylinder.

In a frequent arrangement of the calendering group, the first counter cylinder is located above the upper working cylinder and is laterally displaced so that the tangency line is inclined, for example by about 45°, and the second counter cylinder is located under the lower working cylinder which is also displaced laterally to have an inclined tangency line. The cylinders are conventionally numbered from top to bottom; consequently, the lower working cylinder represents cylinder no. 3 of the group.

The first wire setting cylinder cooperates with the second wire setting cylinder to wrap and correctly direct the metal intermediate layer towards the working cylinders. Said first wire setting cylinder is located under the path of both the textile and metallic intermediate layer and is also movable (i.e. with a movable axis) between a working position and a rest position.

The positioning of the first wire setting cylinder can be carried out with a straight trajectory or more preferably by mounting the cylinder on an oscillating arm with respect to a fulcrum. The rotation of the arm moves the first wire setting cylinder closer to or away from the second wire setting cylinder, substantially having the effect of closing or opening the wire setting group for the metallic intermediate layer.

In the working position, the first wire setting cylinder is proximal to the second wire setting cylinder (which is also in working set-up) and close to the calendering group. In the non-operative standby position, on the other hand, said first wire setting cylinder is distanced from the calendering group, so as to allow displacing the second cylinder around the aforementioned fulcrum and not to hinder the path of the textile guided towards the drawing-in cylinder.

The second wire setting cylinder is provided with surface grooves conjugated to the structure of the metallic intermediate layer. In particular, the number of grooves matches the number of wires of the metal layer and the size of the grooves is in relation to the diameter of the wires. The first wire setting cylinder is preferably also provided with grooves specific for the metallic intermediate layer adopted (number of wires and their diameter).

The machine advantageously comprises a settling section of the textile intermediate layer essentially arranged to compensate for any loss of width during transport.

In an embodiment of the invention, both the path of the textile intermediate layer and the path of the metallic intermediate layer pass through said settling section and the machine comprises one or more movable deviators that can be positioned to define:
a path of the intermediate textile layer of interaction with the settling section in which the section is operative and acts on said textile layer;
a path of the metallic intermediate layer of non-interaction with the settling section, based on which the settling section remains substantially non-operative.

Said settling section preferably includes a first station termed expansion station and a second station termed edge adjustment station. The first station acts on the entire intermediate layer to bring it to the correct width (compensating for its tendency to shrink); the second station essentially acts on the lateral edges of the textile intermediate layer to correctly distance the edge wires. The first and the second station are arranged in this order along the path towards the calendering section, i.e. the second station is the closest to the calendering group.

The first station preferably includes at least one expansion cylinder, for example having a curved axis. The path of the textile involves contact with a desired wrap angle around said at least one expanding cylinder. The path of the metallic intermediate layer, on the other hand, is distanced from said at least one expansion cylinder.

The second station may include two edge adjusting devices respectively right and left and positioned to act on the lateral edges of the intermediate layer. Advantageously, the path of the textile passes through a zone of operation of said adjusters; the path of the metal passes at a distance from the area of operation of said adjusters. Typically, the metallic intermediate layer has a smaller width than the textile and due to the smaller width the metallic intermediate layer does not interact with said edge adjusting devices. Each of the adjusters may comprise a group of cylinders, for example three cylinders.

In one embodiment both the expanding station and the edge adjustment station are situated between an intermediate layer joining press and the calendering group. In this embodiment, both the path of the textile and the path of the metal can pass through said expanding station, and the interaction of the intermediate layer with the station essentially depends on the position of one or more movable deviators.

For example said first station comprises two expansion cylinders; the path of the textile intermediate layer and the path of the metallic intermediate layer transit above the first expanding cylinder and under the second expanding cylinder. Due to the arrangement of the movable diverting cylinders, however, the path of the textile is wrapped around the cylinders so that they produce the desired expanding effect; the path of the metal on the other hand remains at a distanced from said cylinders so that the metallic intermediate layer transits through the station substantially unaltered and without interacting therewith.

In one embodiment the movable diverters that impose the path of the textile or the metallic intermediate layer comprise at least one diverting cylinder upstream of said first station and another diverting cylinder placed between the first station and the second station. The mutual position of these two movables diverters determines the intermediate layer's path and the interaction thereof with the devices of the settling section.

In a particularly preferred embodiment, the first expanding station (normally equipped with curved axis cylinders) is located upstream of the joining press. With this positioning, the textile intermediate layer path and the path of the metal intermediate layer can be almost coincident in the section between the joining press and the calendering group. This is an advantage as a simpler and more linear drawing in is achieved. Furthermore, this embodiment allows the joining press to be brought closer to the calendering group to simplify the machine and reduce the waste of material resulting from the change of the intermediate layer.

Advantageously, downstream of the joining press, and in the proximity thereof, there is a movable diverter which acts on the metallic intermediate layer determining a skimming passage of the intermediate layer over a magnetic plane. This expedient allows to slightly "brake" the metallic intermediate layer and stretches the metal wires that compose it so as to make their arrangement uniform.

In a variant of the invention at least one of the wire setting cylinders can be extracted laterally. Preferably, at least the second wire setting cylinder, which is the heaviest, can be extracted laterally. For example, the second wire setting cylinder is mounted on sliding blocks of the movable support which allow the lateral extraction thereof and the insertion of a different wire setting cylinder based on the characteristics of the metallic intermediate layer. This operation can also be performed while the machine is operating with the textile. A similar lateral extraction system can be provided for the first wire setting cylinder.

The features and advantages of the invention will be even more evident with the aid of the following description which relates to a particularly preferred embodiment.

### Brief description of the figures

Fig.1 is a simplified diagram of a combined machine in accordance with an embodiment of the invention and in a production setup with a textile intermediate layer.
Fig.2 represents the machine of Fig.1 in an intermediate step of a procedure for changing the intermediate layer from textile to metal.
Fig.3 represents the machine of Fig.1 once the change has been completed and in production mode with a metallic intermediate layer.
Fig.4 is a detail of Fig.1 and shows the textile drawing-in area.
Fig.5 is similar to Fig.4 but refers to the production with a metallic intermediate layer.
Figs.6 and 7 show some details of the group comprising the drawing-in cylinder for fabric and the wire setting cylinders for the metallic intermediate layer, in an embodiment of the invention.
Fig.8 shows a combined machine accordance with a particularly preferred embodiment, and in production mode with the textile intermediate layer.
Fig.9 shows the combined machine of Fig.8, in production setup with a metal intermediate layer.
Figs.10 and 11 show details respectively of Fig.8 and of Fig.9 with reference to the group comprising the textile drawing-in cylinder and the metal wire setting cylinders.

### Detailed description

The figures show the following details:
1 elastomer calendering group
101 upper counter-cylinder
102 upper working cylinder
103 lower working cylinder
104 lower counter-cylinder
105 gap space between the working cylinders
110 load-bearing structure
2 path of the intermediate layer in the machine
3 expansion device
31, 32 curved-axis cylinders of the device 3
4 edge wire adjusting device
41-43 cylinders of the device 4
5 first mobile diverter
6 second mobile diverter
7 support of the second mobile diverter 6
8 drawing-in cylinder for textile intermediate layer
9 first wire setting cylinder for the metallic intermediate layer
10 second wire setting cylinder for the metallic intermediate layer
11 movable support of the cylinders 8 and 10
12 fulcrum of the movable support 11
13 fabric-metal joining press
131 fixed plane of the press
132 movable plane of the press
14 textile intermediate layer
14a cut edge of the textile intermediate layer
15 metallic intermediate layer
15a cut edge of the metallic intermediate layer
16 magnetic plate
20 supports of the textile drawing-in cylinder 8
21 supports of the second wire setting cylinder 10
22 cylinder support base 10
23 sliders for lateral extraction of the cylinder 10
24 body of the support 11
25 guide of the first wire setting cylinder 9 (first embodiment)
26 grooved surface of the second wire setting cylinder 10
50 visual detector of wire thickness
51 movable diverter for skimming passage of the metallic intermediate layer over a magnetic plate
52 load-bearing arm of the cylinder 9 (second embodiment)
53 rotation fulcrum of the arm 52
54 skaters for lateral extraction of the cylinder 9
55 support of the cylinder 9 associated with the arm 52

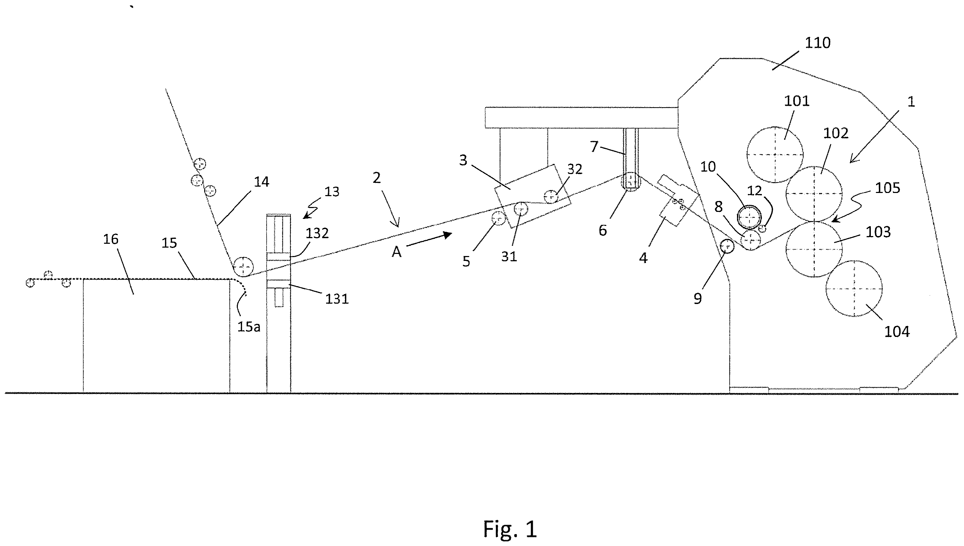

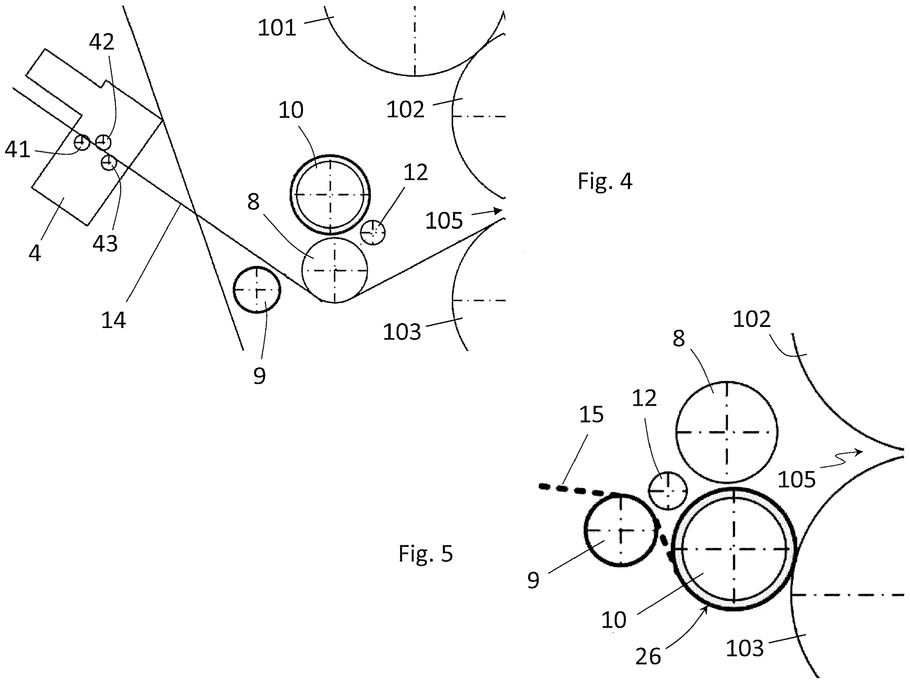

Fig.1 shows the production set-up with textile. The position of the movable deviators 5 and 6 is such that the textile intermediate layer 14, following the path 2, is wrapped around the curved cylinders 31 and 32 and around the cylinders of the adjusting devices 4 (one on each side), so that the textile layer 14 is suitably brought to width before engaging in the calendering group 1. It can be noted there are two adjusting devices 4, one on each side, and each comprising a group of cylinders, for example three cylinders in the illustrated case. The three cylinders 41, 42, 43 of one of the adjusters 4 can be seen in Fig.5.

Fig.1 also shows the direction of advancement A of the textile layer 14 which obviously is directed towards the calendering group 1.

The assembly of the device 3 and of the adjusters 4 forms a section for settling the textile intermediate layer. The device 3 represents a first station which essentially expands the textile layer; the adjusters 4 represent a second station which correctly arranges the edge wires.

After exiting the adjusting devices 4, the textile layer 14 is brought to the correct width and is ready to be "rubbered", that is, for the application of the elastomer. Said textile layer 14 passes around the drawing-in cylinder 8 and from this it reaches the gap space 105 where the working cylinders 102 and 103 transfer the elastomer on either sides of the layer forming the desired sandwich.

In this setup for operation with the textile layer, the wire setting cylinders 9 and 10 intended for operation with the metallic intermediate layer are not in use in a standby or rest position. It should be noted that the first cylinder 9 is distanced from the calendering group 1 and that the second cylinder 10 is located above the path of the textile layer 14, thus being accessible from above.

It can be noted in Fig.1 the edge 15a of the metallic intermediate layer 15 which is ready to be placed in the machine. The operation of changing the intermediate layer is now described.

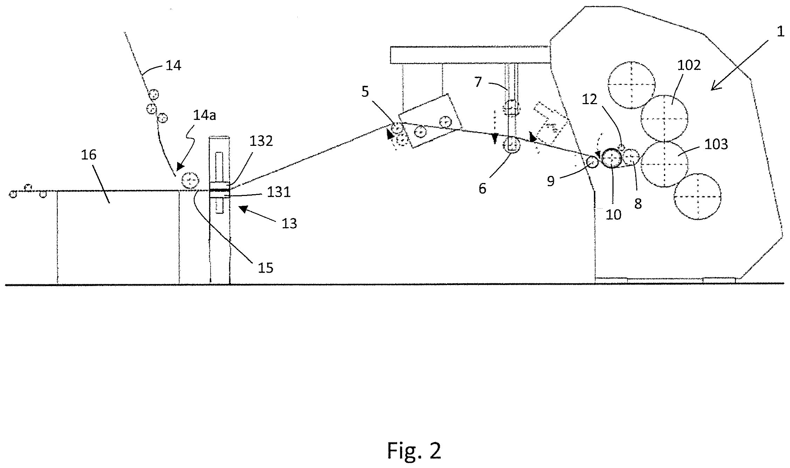

Fig. 2 shows an intermediate condition during the shift from the setup for production with textile layer to the setup for production with metal layer.

After the machine has been stopped, the textile layer 14 is cut (note the edge 14a) and the edge on the machine side (i.e. on the side of the group 1) is joined in the press 13 with the edge 15a of the metal layer 15. Fig. 2 shows the press 13 closed during the execution of the joint.

The joint can be made for example by vulcanizing an elastomer placed between the two ends of the intermediate layer so as to join them together; the technique of the joint in the press between two intermediate layers is known and needs not be described in detail for the understanding the present invention. It should be noted that the preparation of the metal layer 15 is facilitated by the magnetic plate 16 holding the metal wires.

The movable deviators 5 and 6 move as indicated by the arrows in Fig. 2. In particular, the first mobile diverter 5 is raised along an inclined trajectory (following a suitable guide) while the second mobile diverter 6 is lowered, for example by telescopic lowering of the respective support 7. The edge adjusters 4 are excluded.

The path of the intermediate layer thus modified, due to the modified setup of the mobile deviators 5 and 6, substantially does not interact with the devices 3 and 4. The metal layer 15 travels close to the cylinders 31 and 32 but without touching them or wrapping them around, and transits under the area of action of the adjusters 4. Furthermore, the metal layer 15 can be narrower than the textile layer to not interact with the cylinders of the devices 4 that are positioned laterally.

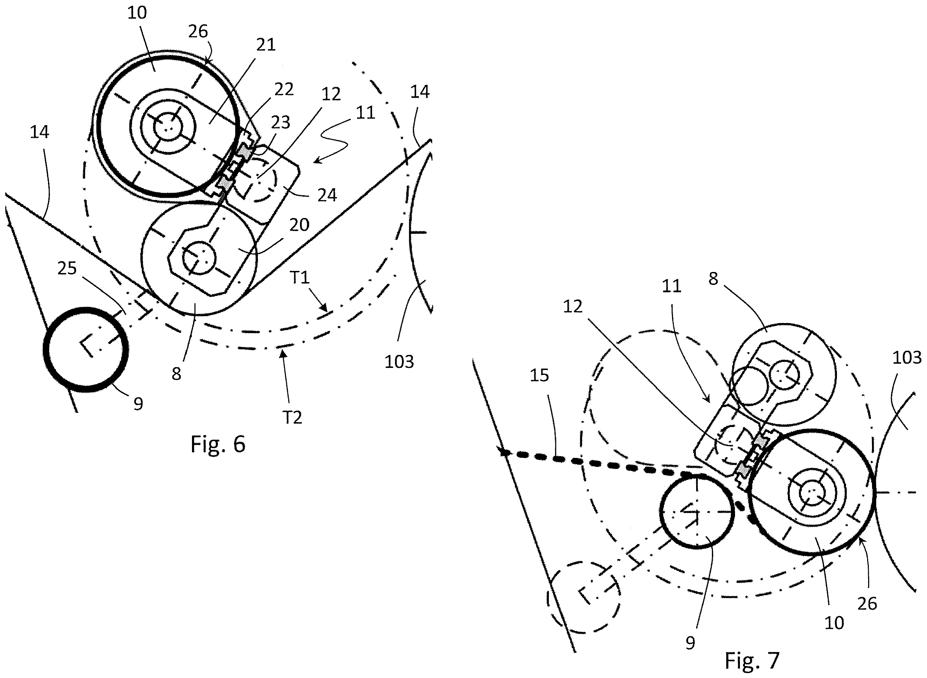

The cylinders 8 and 10 are mounted on the support 11 which is shown in Figs. 6, 7. Said support 11 can rotate with respect to a fulcrum 12 which defines an axis of rotation of the support 11. For the format change from textile to metal, the movable support 11 performs a rotation of about 180 degrees around said fulcrum 12. The rotation is counter-clockwise when looking at Fig. 2. Due to the eccentric position of the fulcrum 12, the cylinders 8 and 10 follow a circular orbit trajectory around the fulcrum 12.

Fig. 2 shows the cylinders 8 and 10 in an intermediate condition which is reached after a rotation of about 90 degrees.

It should be noted the retracted position of the first wire setting cylinder 9, which is relatively far from the calendering group 1, leaves a sufficient free space for the passage of the second cylinder 10.

These operations, in particular the rotation of the support 11 and the consequent re-positioning of the cylinders 8 and 10, can be performed while the textile intermediate layer is still in the calendering group 1.

When the support 11 has completed a rotation of about 90 degrees, the introduction into the machine of the metallic intermediate layer, which is joined to the textile, is started by slowly rotating the cylinders.

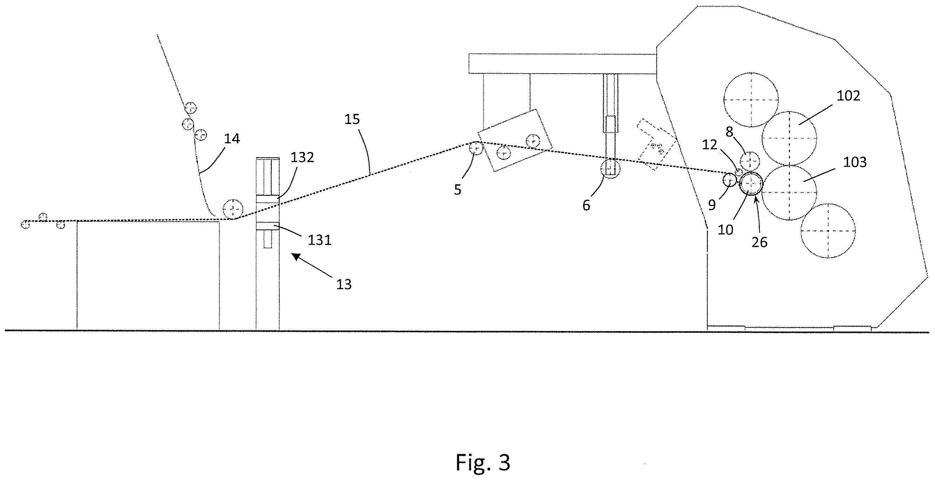

Fig. 3 shows the condition in which the machine has reached the setup for production with the metallic intermediate layer.

It is noted that the second wire setting cylinder 10 is in its working position almost in contact with the working cylinder 103.

When the cylinders 8 and 10 are in position, the first wire setting cylinder 9 moves forward towards the second wire setting cylinder 10, reaching the position in Fig. 3 for cooperation with said second cylinder 10. It can be said that the displacement of the first cylinder 9 "closes" the wire setting group represented by the two cylinders 9 and 10. In the meantime, the fabric drawing-in cylinder 8 reaches a rest position. In said position the cylinder 8 remains inoperative while the metallic intermediate layer is in use in the machine.

Once the metallic intermediate layer has been inserted around the wire setting cylinders 9 and 10 and in the gap space 105, the production with a metallic intermediate layer can be started.

The second cylinder 10 has a densely grooved surface 26 which comprises a groove for each metal wire making up the layer 15 and which arranges the numerous metal wires at even spacing, thus arranging the metal layer 15 for "rubbering".

The transition from metallic to textile is performed by repeating the same operations in a reverse sequence.

After cutting the metal layer, a joining is made in the press 13 between the metal layer in the machine and the textile layer.

The movable diverter 5 is lowered and the movable diverter 6 rises returning to the position of Fig. 1; the first wire setting cylinder 9 retracts by "opening" the wire setting group consisting of the cylinders 9 and 10; at this point the support 11 begins to rotate (clockwise in the figures) around the fulcrum 12.

When the support 11 has completed a rotation of about 90 degrees, the introduction of the new textile layer, joined to the metal, is started. The rotation of the support 11 is completed and the adjusters 4 are included again.

At the end of the sequence, the second wire setting cylinder 10 is in the position of Fig. 1 above the intermediate layer. If necessary, said cylinder 10 can be replaced to prepare for a subsequent processing with a metal layer. This operation can be done while the machine is working with the textile, saving downtime. The positioning of the cylinder 10 above the textile layer facilitates its possible replacement.

Figs. 4 and 5 show enlarged detail of the working area and show the production set-up with a textile intermediate (Fig. 4) and a metallic layer (Fig. 5). Observing the figures, it can be noted in particular the different positioning of the cylinders 8, 9 and 10 thanks to the respective displacement systems.

Figs. 6 and 7 show further details and refer to an embodiment in which the metal wire setting cylinder 10 can be laterally extracted.

Figs. 6 and 7 show a preferred way of making the support 11 which comprises shoulders 20, 21 substantially arranged with an L-shape to support the cylinders 8 and 10. The shoulders 21 of the cylinder 10 are fixed to a base 22 sliding on guides 23 with respect to a body 24.

In some embodiments also the first wire setting cylinder 9 may be laterally extractable, as will be described below. Preferably, both the wire setting cylinders 9 and 10 can be extracted laterally.

A guide 25 is also shown which determines the displacement stroke of the first wire setting cylinder 9 between its working and standby position.

Fig. 6 shows the trajectory T1 travelled by the textile drawing-in cylinder 8 during the transition from textile to metallic, and the trajectory T2 travelled by the wire setting cylinder 10. Following the trajectory T1, the textile drawing-in cylinder 8 moves to the stand-by position of Fig.7; the wire setting cylinder 10 on the other hand follows the trajectory T2 and moves to the working position substantially in contact with the cylinder 103.

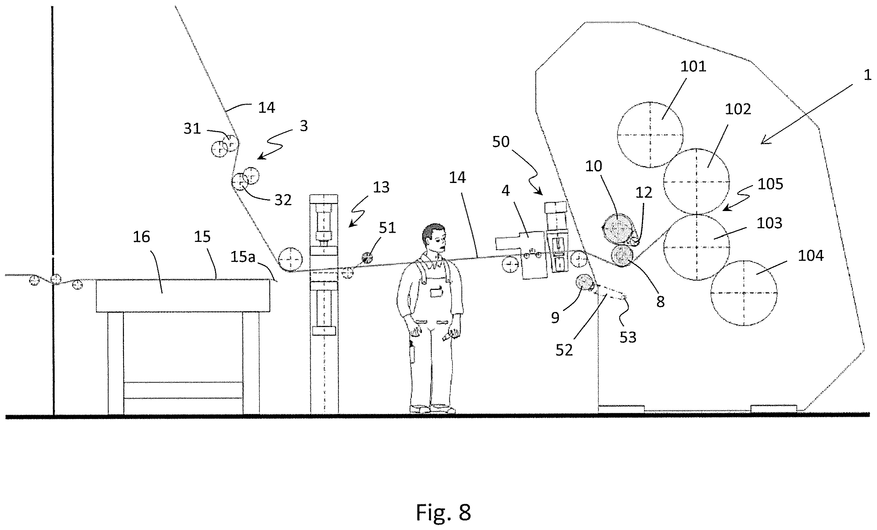

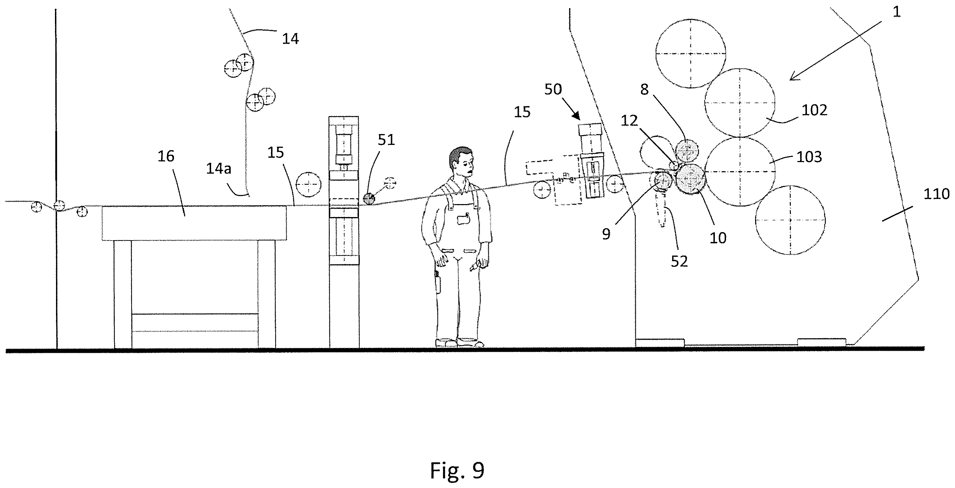

Figs. 8 and 9 show another interesting embodiment of the invention in which the expanding device 3, essentially formed by the cylinders having curved axis 31 and 32, is positioned upstream of the joining press 13.

Due to this location of the expanding device 3, the paths of the textile layer 14 (Fig. 8) and of the metallic layer 15 (Fig. 9) between the press 13 and the calendering group 1 are practically coincident. This simplifies and makes the drawing in more linear.

The solution of Fig. 8 and Fig. 9 allows the press 13 to be closer to the group 1 simplifying the machine and reducing the waste of material during the format change. It should also be noted that the "top" part of the machine in proximity to the calendering group 1 is considerably simplified due to the absence of the device 3 and of the movable diverter 6 with the relative supports.

Figs. 8 and 9 show an optional device 50 for detecting the thickness of the wires, which operates both with the metallic layer and with the textile layer. The machine can comprise a feedback control system which governs the adjustment devices in relation to the measurement provided by said detector 50. In a preferred embodiment, said detector 50 operates in visual mode with a video camera.

Another detail of the embodiment of Figs.8-9 is represented by a small movable diverter 51, called "dancer", which is preferably located downstream and in the proximity of the press 13 and operates with the metallic layer.

In Fig. 8 said deviator 51 is shown in the rest position distanced from the path of the intermediate layer, which in this case is the textile layer 14. In the example, the rest position is a raised position with respect to the intermediate layer.

In Fig. 9, on the other hand, said diverter 51 is shown in the working position, in contact with the metallic intermediate layer 15. The contact with said diverter 51 causes the metal layer 15 to transit close ("skimming" passage) to the plane of the magnetic plate 16. This skimming passage allows the magnetic surface to exert a certain braking and tensioning action on the metallic layer 15. The mobile diverter 51 moves from the rest position to the working position, and vice versa, by means of a suitable actuator.

In Fig. 9 the edge adjuster 4 is represented with a dashed line since it does not operate on the metallic intermediate layer. For example, the metallic layer 15 may have a smaller width than the textile layer 14, so that it does not interact with the cylinders 41-43 of the adjuster 4.

Figs. 8-9 also illustrate a preferred actuation of the first wire setting cylinder 9 which is alternative to the one described above having linear guide 25. Said cylinder 9 in this construction variant is supported by an oscillating arm 52 having a rotation fulcrum 53. The rotation of the arm 52 around said fulcrum 53 brings the cylinder 9 to the standby position (Fig.8) or to the working position (Fig.9).

In a preferred embodiment, the first wire setting cylinder 9 can also be laterally extracted. For example, an embodiment is shown in which the wire setting cylinder 9 is mounted on skids or guides 54 associated with a support 55 placed at one end of the arm 52. The rotation fulcrum 53 is located at the opposite end. This assembly mounted on guides with the possibility of lateral extraction is similar to one described for cylinder 10.

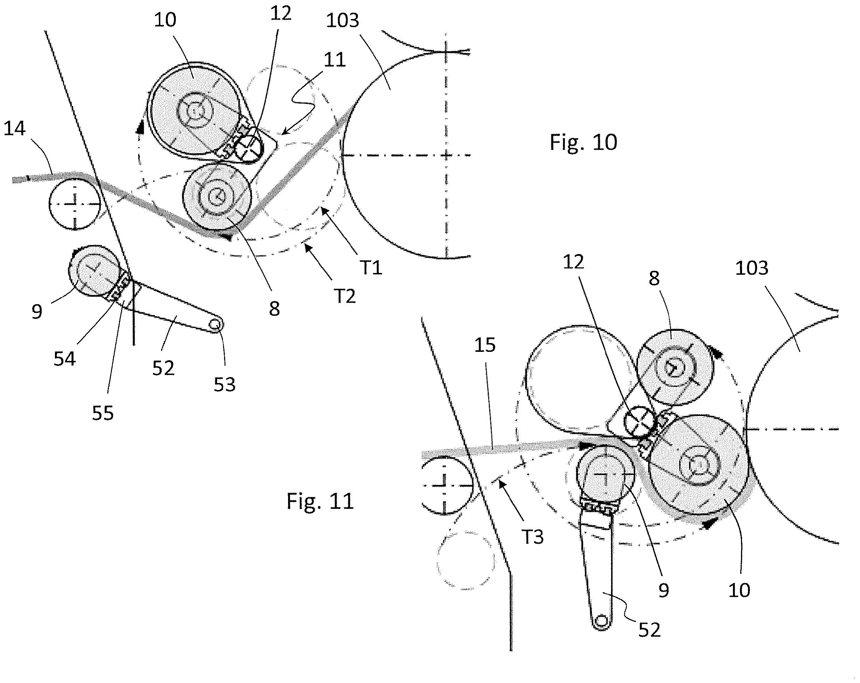

The details described above, as well as the path of the textile or metallic intermediate layer, are even better visible in Figs. 10 and 11.

Fig. 10 illustrates a working set-up with intermediate textile layer 14 which is drawn in through the cylinder 8. The wire setting cylinders 9 and 10 are in the standby positions. Note in particular the arm 52 which is in the open position and distanced from the calendering group 1. Fig. 10 also shows, with a dashed line, the positions that can be reached by the cylinders 8 and 10 due to the rotation of the support 11.

Fig. 11 illustrates a working setup with metal layer 15. Note the different position of the cylinders 8 and 10 due to the effect of the revolution around the point 12, i.e. the rotation of the support 11 around said fulcrum. The second wire setting cylinder 10 is now in the working position almost in contact with the calendering cylinder 103. Note also the arm 52 rotated in the closed position towards the group 1, which brings the first wire setting cylinder 9 close to the second cylinder 10, so that the metallic intermediate layer is correctly drawn towards the gap 105.

Fig.10 indicate the trajectories T1 and T2 above described. Fig. 11 indicates the circular arc trajectory T3 which is crossed by the first wire setting cylinder 9 when moving from the rest position to the working position, due to the rotation of the arm 52 around the pin 53.

It should be noted that the construction details described with reference to Figs. 8-11 will also be applicable in the various other embodiments of the invention and independently of each other.

## Claims

1. Machine for manufacturing, by a continuous calendering process, a sandwich semi-finished product comprising two layers of elastomer applied on an intermediate support layer, the machine being of the combined type adapted to operate with a textile intermediate layer (14) and with a metallic intermediate layer (15) comprising a multitude of metal wires, wherein the machine comprises:
an elastomer application group (1), also termed calendering group, which includes two working cylinders (102, 103) and two respective counter-cylinders (101, 104), wherein an intermediate layer in use is guided to pass through a gap space (105) between said two working cylinders and each of the two counter-cylinders is associated with one of the working cylinders and is arranged to apply the elastomeric material in a plastic state on the surface of said respective working cylinder;
a textile drawing-in cylinder (8) for drawing in the textile intermediate layer, said cylinder placed in proximity to the calendering group to direct the textile intermediate layer (14) towards said gap space (105);
a pair of wire setting cylinders (9, 10) for operation with the metallic intermediate layer which pair includes, in the feeding direction of the intermediate layer towards the working cylinders, a first wire setting cylinder (9) and a second wire setting cylinder (10), said second wire setting cylinder (10) having a surface provided with a plurality of grooves, each groove being adapted to accommodate one of the wires of the metallic intermediate layer (15), to prepare said metallic layer for the application of the elastomeric material;
**characterized in that**:
the machine comprises a movable support (11) on which are mounted said cylinder (8) for drawing-in the textile intermediate layer and said second wire setting cylinder (10) of the metallic intermediate layer;
and **in that** said movable support (11) can be arranged:
in a first position for production with a textile intermediate layer, wherein said drawing-in cylinder (8) is in its working position and said second wire setting cylinder (10) is in a standby position, and
in a second position for the production with a metallic intermediate layer, wherein said drawing-in cylinder (8) is in a standby position and the second wire setting cylinder (10) is in its working position;
wherein said movable support (11) and said two cylinders (8, 10) associated therewith are located above the path of the textile intermediate layer and above the path of the metallic intermediate layer.

2. Machine according to claim 1 wherein: said movable support (11), which carries the textile drawing-in cylinder (8) and the second wire setting cylinder (10), is rotatable around a fulcrum axis (12); said fulcrum axis is parallel to the axes of said two cylinders (8, 10) and does not belong to a plane containing the axes of said two cylinders; said two cylinders (8, 10) travel between the respective working positions and standby positions by revolving around said axis (12).

3. Machine according to claim 2, wherein in the first position of the support (11) the drawing-in cylinder (8) is located under the second wire setting cylinder (10), and in the second position of the support (11) the drawing-in cylinder (8), in a standby condition, is located above the second wire setting cylinder (10).

4. Machine according to claim 3 wherein, in a cross section, a line joining the rotation fulcrum (12) of the support (11) with the longitudinal axis of the drawing-in cylinder (8) and a line joining the fulcrum with the longitudinal axis of the second wire setting cylinder (10) form an angle of 90 degrees or of about 90 degrees.

5. Machine according to one of the previous claims wherein the two working cylinders (102, 103) are vertically arranged one above the other, thus defining an upper working cylinder (102) and a lower working cylinder (103); when the movable support (11) is in the second position for operation with a metallic intermediate layer, the second wire setting cylinder (10) is located adjacent to the lower working cylinder (103).

6. Machine according to one of the previous claims wherein the first wire setting cylinder (9) is located below the path of both the textile and the metallic intermediate layer and said cylinder (9) is movable close to and away from the calendering group (1) being able to reach a working position proximal to the second wire setting cylinder (10) and to the calendering group (1) and a standby position distanced from the calendering group.

7. Machine according to one of the previous claims comprising:
a section (3, 4) for settling the textile intermediate layer;
one or more movable diverters (5, 6) which are displaceable in at least a first position and a second position respectively to define:
a path of the textile intermediate layer (14) of interaction with the settling section;
a path of the metallic intermediate layer (15) of non-interaction with the settling section.

8. Machine according to claim 7 wherein the settling section of the textile intermediate layer comprises a first station (3) which includes at least one expansion cylinder (31, 32) preferably having a curved profile, and:
the path of the textile intermediate layer (14) involves contact with a desired winding angle around said at least one expansion cylinder;
the path of the metallic intermediate layer (15) is distanced from said at least one expansion cylinder.

9. Machine according to claim 8 wherein said first station (3) comprises two expansion cylinders (31, 32) and wherein the path of the textile intermediate layer (14) and the path of the metallic intermediate layer (15) pass over the first expansion cylinder (31) and under the second expansion cylinder (32).

10. Machine according to claim 8 or 9, wherein the settling section of the textile intermediate layer comprises a second station for edge adjustment, which includes two edge adjusting devices (4) respectively right and left, configured to act on the lateral edges of the textile intermediate layer, and:
the path of the textile intermediate layer (14) transits in a zone of operation of said adjusting devices;
the path of the metallic intermediate layer (15) transits at a distance above or below the zone of operation of said adjusting devices.

11. Machine according to claim 10 comprising at least one movable diverting cylinder (5) upstream of the first station and another movable cylinder (6) placed between the first station (3) and the second station (4) to define the paths of the textile and the metallic intermediate layer.

12. Machine according to one of claims 1 to 6 comprising:
a joint press (13) suitable for making a junction between the textile intermediate layer and the metal intermediate layer;
an expansion device (3) for expanding the textile intermediate layer, preferably with cylinders having a curved axis;
wherein said expansion device is located upstream of said press (13) in the forward direction of travel (A) of the intermediate layer.

13. Machine according to one of the previous claims wherein the path of the textile intermediate layer and the path of the metallic intermediate layer are substantially coincident in the section comprised between a press (13) for joining between the textile intermediate layer and the metallic intermediate layer, and the calendering group (1).

14. Machine according to one of the previous claims, wherein at least one of said first wire setting cylinder (9) and said second wire setting cylinder (10) can be laterally extracted, preferably at least the second cylinder (10).

15. Machine according to claim 14 wherein said at least one extractable wire setting cylinder (9, 10) is mounted on sliders (23, 54) which allow the lateral extraction thereof.

16. Method for passing from the production with a textile intermediate layer (14) to the production with a metallic intermediate layer (15) or vice versa in a combined machine according to at least one of the previous claims, the method comprising the operations of:
cutting the intermediate layer in production and making a junction in the press (13) with the new intermediate layer;
positioning the first wire setting cylinder (9) for the metallic intermediate layer in an operative position, in case of shift to the metallic intermediate layer, or in a standby position, in case of shift to the textile intermediate layer, by actuating a respective positioning device (25, 52);
positioning the second wire setting cylinder (10) for the metallic intermediate layer and the drawing-in cylinder (8) for the textile intermediate layer by actuating the movable support (11) on which both said cylinders (8, 10) are mounted, moving said wire setting cylinder (10) to the operative position and said drawing-in cylinder (8) to the non-operative standby position, in case of shift to the metallic intermediate layer, and vice versa moving said wire setting cylinder to the non-operative standby position and said drawing-in cylinder to the operative position in case of shift to the textile intermediate layer.

## Patentansprüche

1. Maschine zur Herstellung eines Sandwich-Halbzeugs mit zwei auf einer Zwischenträgerschicht aufgebrachten Elastomerschichten durch ein kontinuierliches Kalandrierungsverfahren, wobei die Maschine vom kombinierten Typ ist, der geeignet ist, mit einer textilen Zwischenschicht (14) und mit einer metallischen Zwischenschicht (15), die eine Vielzahl von Metalldrähten umfasst, zu agieren Zwischenschicht, wobei die Maschine umfasst:
eine Elastomer-Auftragsgruppe (1), auch Kalandriergruppe genannt, die zwei Arbeitszylinder (102, 103) und jeweils zwei Gegenzylinder (101, 104) umfasst, wobei eine Zwischenschicht im Einsatz durch einen Zwischenraum (105) zwischen den zwei Arbeitszylindern geführt wird, wobei jeder der zwei Gegenzylinder einem der Arbeitszylinder zugeordnet und dazu eingerichtet ist, das Elastomermaterial in einem plastischen Zustand auf die Oberfläche des jeweiligen Arbeitszylinders aufzubringen;
einen Textileinzugszylinder (8) zum Einziehen der textilen Zwischenschicht, wobei der Zylinder in der Nähe der Kalandriergruppe angeordnet ist, um die textile Zwischenschicht (14) zu dem Zwischenraum (105) zu leiten;
ein Paar Drahteinstellzylinder (9, 10) zum Betrieb mit der metallischen Zwischenlage, wobei das Paar, in der Zuführrichtung der Zwischenlage zu den Arbeitszylindern, einen ersten Drahteinstellzylinder (9) und einen zweiten Drahteinstellzylinder (10)aufweist,
wobei der zweite Drahteinstellzylinder (10) eine Oberfläche hat, die mit einer Mehrzahl von Rillen versehen ist, wobei jede Rille geeignet ist, einen der Drähte der metallischen Zwischenschicht (15) aufzunehmen, um die metallische Schicht für das Aufbringen der elastomeres Material vorzubereiten;
**dadurch gekennzeichnet, dass**:
die Maschine einen bewegbaren Träger (11) umfasst, auf dem der Zylinder (8) zum Einziehen der textilen Zwischenschicht und der besagte zweite Drahteinstellzylinder (10) der metallischen Zwischenschicht montiert sind;
und dadurch, dass der bewegliche Träger (11) angeordnet werden kann:
in einer ersten Produktionsposition mit einer textilen Zwischenlage, wobei sich der Einzugszylinder (8) in seiner Arbeitsposition und der zweite Drahteinstellzylinder (10) in einer Bereitschaftsposition befindet, und
in einer zweiten Position für die Produktion mit einer metallischen Zwischenschicht, wobei sich der Einzugszylinder (8) in einer Bereitschaftsposition und der zweite Drahteinstellzylinder (10) in seiner Arbeitsposition befindet;
wobei der bewegbare Träger (11) und die beiden ihm zugeordneten Zylinder (8, 10) über dem Weg der textilen Zwischenschicht und über dem Weg der metallischen Zwischenschicht angeordnet sind.

2. Maschine nach Anspruch 1, wobei: der bewegliche Träger (11), der den Textileinzugszylinder (8) und den zweiten Drahteinstellzylinder (10) trägt, um eine Drehachse (12) drehbar ist; die Drehachse parallel zu den Achsen der zwei Zylinder (8, 10) ist und nicht zu einer Ebene gehört, die die Achsen der zwei Zylinder enthält; die beiden Zylinder (8, 10) sich zwischen den jeweiligen Arbeitspositionen und Bereitschaftspositionen bewegen, indem sie sich um die Achse (12) drehen.

3. Maschine nach Anspruch 2, wobei in der ersten Position des Trägers (11) der Einzugszylinder (8) unter dem zweiten Drahteinstellzylinder (10) angeordnet ist und in der zweiten Position des Trägers (11) der Einzugszylinder (8) in einem Bereitschaftszustand über dem zweiten Drahteinstellzylinder (10) angeordnet ist.

4. Maschine nach Anspruch 3, wobei, in einem Querschnitt, eine die Drehachse (12) des Trägers (11) mit der Längsachse des Einzugszylinders (8) verbindende Linie und eine die Drehachse mit der Längsachse des zweiten Drahtstellzylinders (10) verbindende Linie einen Winkel von 90 Grad oder von etwa 90 Grad bilden.

5. Maschine nach einem der vorhergehenden Ansprüche, wobei die beiden Arbeitszylinder (102, 103) vertikal übereinander angeordnet sind und somit einen oberen Arbeitszylinder (102) und einen unteren Arbeitszylinder (103) definieren; und wenn der bewegliche Träger (11) in der zweiten Position für den Betrieb mit einer metallischen Zwischenschicht ist, der zweite Drahteinstellzylinder (10) neben dem unteren Arbeitszylinder (103) angeordnet ist.

6. Maschine nach einem der vorangehenden Ansprüche, wobei der erste Drateinstellzylinder (9) unter dem Weg sowohl der textilen als auch der metallischen Zwischenschicht angeordnet ist, und der Zylinder (9) in der Nähe der Kalandriergruppe (1) und von dieser weg bewegbar ist, und eine Arbeitsposition in der Nähe des zweiten Drahteinstellzylinders (10) und der Kalandriergruppe (1) und eine von der Kalandriergruppe beabstandete Bereitschaftsposition erreichen kann.

7. Maschine nach einem der vorhergehenden Ansprüche, umfassend:
einen Abschnitt (3, 4) zum Absetzen der textilen Zwischenschicht;
einen oder mehrere bewegliche Umlenker (5, 6), die jeweils in mindestens eine erste Position und eine zweite Position versetzbar sind, um Folgendes zu definieren:
einen Weg der textilen Zwischenschicht (14) der Interaktion mit dem Absetzabschnitt;
einen Weg der metallischen Zwischenschicht (15) ohne Interaktion mit dem Absetzabschnitt.

8. Maschine nach Anspruch 7, wobei der Absetzabschnitt der textilen Zwischenschicht eine erste Station (3) umfasst, die mindestens einen Expansionszylinder (31, 32) umfasst, der vorzugsweise ein gekrümmtes Profil hat, und:
der Weg der textilen Zwischenschicht (14) einen Kontakt mit einem gewünschten Windungswinkel um den mindestens einen Expansionszylinder umfasst;
der Weg der metallischen Zwischenschicht (15) von dem mindestens einen Expansionszylinder beabstandet ist.

9. Maschine nach Anspruch 8, wobei die erste Station (3) zwei Expansionszylinder (31, 32) umfasst, und wobei der Weg der textilen Zwischenschicht (14) und der Weg der metallischen Zwischenschicht (15) über den ersten Expansionszylinder (31) und unter dem zweiten Expansionszylinder (32) verlaufen.

10. Maschine nach Anspruch 8 oder 9, wobei der Absetzabschnitt der textilen Zwischenlage eine zweite Station zur Kantenanpassung umfasst, die zwei Kantenanpassungsvorrichtungen (4) jeweils rechts und links hat, die konfiguriert sind, um auf die seitlichen Kanten der textilen Zwischenschicht einzuwirken und:
der Weg der textilen Zwischenschicht (14) in einen Betriebsbereich der Anpassungsvorrichtungen übergeht;
der Weg der metallischen Zwischenschicht (15) in einem Abstand über oder unter dem Interaktionssbereich der Anpassungsvorrichtungen verläuft.

11. Maschine nach Anspruch 10 mit mindestens einem beweglichen Umlenkzylinder (5) stromaufwärts der ersten Station und einem weiteren beweglichen Zylinder (6), der zwischen der ersten Station (3) und der zweiten Station (4) angeordnet ist, um die Wege der textilen Zwischenschicht und der metallischen Zwischenschicht zu definieren.

12. Maschine nach einem der Ansprüche 1 bis 6, umfassend:
eine Verbindungspresse (13), die zum Herstellen einer Verbindung zwischen der textilen Zwischenschicht und der metallischen Zwischenschicht geeignet ist;
eine Expansionsvorrichtung (3) zum Expandieren der textilen Zwischenlage, vorzugsweise mit Zylindern mit gekrümmter Achse;
wobei die Expansionsvorrichtung stromaufwärts der Presse (13) in der Vorwärtsbewegungsrichtung (A) der Zwischenschicht angeordnet ist.

13. Maschine nach einem der vorangehenden Ansprüche, wobei der Weg der textilen Zwischenschicht und der Weg der metallischen Zwischenschicht in dem Abschnitt im Wesentlichen zusammenfallen, der zwischen einer Presse (13) zum Verbinden zwischen der textilen Zwischenschicht und der metallischen Zwischenschicht und der Kalandriergruppe (1) liegt.

14. Maschine nach einem der vorangehenden Ansprüche, wobei mindestens einer des ersten Drahteinstellzylinders (9) und des zweiten Drahteinstellzylinders (10) seitlich ausziehbar ist, vorzugsweise zumindest der zweite Zylinder (10).

15. Maschine nach Anspruch 14, wobei der mindestens eine herausziehbare Drahteinstellzylinder (9, 10) auf Gleitstücken (23, 54) angebracht ist, die dessen seitliches Herausziehen ermöglichen.

16. Verfahren zum Übergang von der Produktion mit einer textilen Zwischenschicht (14) zu der Produktion mit einer metallischen Zwischenschicht (15) oder umgekehrt in einer kombinierten Maschine nach mindestens einem der vorhergehenden Ansprüche, wobei das Verfahren die Schritte umfasst:
Schneiden der Zwischenschicht in der Produktion und Herstellen einer Verbindung in der Presse (13) mit der neuen Zwischenschicht;
Positionieren des ersten Drahteinstellzylinders (9) für die metallische Zwischenlage in einer Betriebsstellung im Falle eines Wechsels auf die metallische Zwischenlage oder in einer Bereitschaftsposition im Falle eines Wechsels auf die textile Zwischenlage durch Betätigung einer entsprechenden Positionierungseinrichtung (25, 52);
Positionieren des zweiten Drahteinstellzylinders (10) für die metallische Zwischenlage und des Einzugszylinders (8) für die textile Zwischenlage durch Betätigen des beweglichen Trägers (11), auf dem beide Zylinder (8, 10) montiert sind, bewegen des Drahteinstellzylinders (10) in die Betriebsposition und des Einzugszylinder (8) in die nicht-betriebsbereite Bereitschaftsposition im Falle eines Wechsels auf die metallische Zwischenschicht, und umgekehrt, bewegen des Drahteinstellzylinders in die nicht-betriebsbereite Bereitschaftsposition und den Einzugszylinder in die Betriebsposition im Falle eines Wechsels auf die textile Zwischenlage.

## Revendications

1. Machine pour la fabrication, par un procédé de calandrage continu, d'un semi-produit sandwich comprenant deux couches d'élastomère appliquées sur une couche support intermédiaire, la machine étant du type combiné adaptée pour fonctionner avec une couche intermédiaire textile (14) et avec une couche intermédiaire métallique (15) comprenant une multitude de fils métalliques, ladite machine comprenant :
un groupe d'application d'élastomère (1), également appelé groupe de calandrage, qui comprend deux cylindres de travail (102, 103) et deux contre-cylindres respectifs (101, 104), dans laquelle une couche intermédiaire en cours d'utilisation est guidée pour traverser un espace interstitiel (105) entre lesdits deux cylindres de travail et chacun des deux contre-cylindres est associé à l'un des cylindres de travail et est agencé pour appliquer le matériau élastomère à l'état plastique sur la surface dudit cylindre de travail respectif ;
un cylindre d'insertion textile (8) pour insérer la couche intermédiaire textile, ledit cylindre étant placé à proximité du groupe de calandrage pour diriger la couche intermédiaire textile (14) vers ledit espace interstitiel (105);
une paire de cylindres de pose de fil (9, 10) pour un fonctionnement avec la couche métallique intermédiaire cette paire comprenant, dans la direction d'alimentation de la couche intermédiaire vers les cylindres de travail, un premier cylindre de pose de fil (9) et un deuxième cylindre de pose de fil (10), ledit deuxième cylindre de pose de fil (10) ayant une surface pourvue d'une pluralité de rainures, chaque rainure étant adaptée pour recevoir l'un des fils de la couche intermédiaire métallique (15), pour préparer ladite couche métallique pour l'application du matériau élastomère ;
**caractérisée en ce que** :
la machine comporte un support mobile (11) sur lequel sont montés ledit cylindre (8) d'insertion de la couche intermédiaire textile et ledit deuxième cylindre de pose de fil (10) de la couche intermédiaire métallique ;
et **en ce que** ledit support mobile (11) peut être agencé :
selon une première position de fabrication avec une couche intermédiaire textile, dans laquelle ledit cylindre d'insertion (8) est dans sa position de travail et ledit deuxième cylindre de pose de fil (10) est dans une position d'attente, et
selon une deuxième position pour la fabrication avec une couche intermédiaire métallique, dans laquelle ledit cylindre d'insertion (8) est dans une position d'attente et le deuxième cylindre de pose de fil (10) est dans sa position de travail ;
ledit support mobile (11) et lesdits deux cylindres (8, 10) associés à celui-ci étant situés au-dessus du trajet de la couche intermédiaire textile et au-dessus du trajet de la couche intermédiaire métallique.

2. Machine selon la revendication 1 dans laquelle : ledit support mobile (11), qui porte le cylindre de d'insertion (8) textile et le deuxième cylindre de pose de fil (10), est mobile en rotation autour d'un axe pivot (12) ; ledit axe pivot est parallèle aux axes desdits deux cylindres (8, 10) et n'appartient pas à un plan contenant les axes desdits deux cylindres ; lesdits deux cylindres (8, 10) se déplacent entre les positions de travail et les positions d'attente respectives en tournant autour dudit axe (12) .

3. Machine selon la revendication 2, dans laquelle dans la première position du support (11) le cylindre de d'insertion (8) est situé sous le deuxième cylindre de pose de fil (10), et dans la deuxième position du support (11) le cylindre d'insertion (8), dans un état d'attente, est situé au-dessus du deuxième cylindre de pose de fil (10).

4. Machine selon la revendication 3, dans laquelle, en coupe transversale, une ligne joignant le pivot de rotation (12) du support (11) à l'axe longitudinal du cylindre d'insertion (8) et une ligne joignant le pivot à l'axe longitudinal du deuxième cylindre de pose de fil (10) forment un angle de 90 degrés ou d'environ 90 degrés.

5. Machine selon l'une des revendications précédentes dans laquelle les deux cylindres de travail (102, 103) sont disposés verticalement l'un au-dessus de l'autre, définissant ainsi un cylindre de travail supérieur (102) et un cylindre de travail inférieur (103) ; lorsque le support mobile (11) est dans la deuxième position de fonctionnement avec une couche intermédiaire métallique, le deuxième cylindre de pose de fil (10) est situé à côté du cylindre de travail inférieur (103).

6. Machine selon l'une des revendications précédentes dans laquelle le premier cylindre de pose de fil (9) est situé sous le trajet à la fois du textile et de la couche intermédiaire métallique et ledit cylindre (9) est mobile à proximité et à l'écart du groupe de calandrage (1) pouvant atteindre une position de travail à proximité du deuxième cylindre de pose de fil (10) et du groupe de calandrage (1) et une position d'attente éloignée du groupe de calandrage.

7. Machine selon l'une des revendications précédentes comprenant
une section (3, 4) pour la mise en place de la couche intermédiaire textile;
un ou plusieurs déviateurs mobiles (5, 6) qui sont déplaçables dans au moins une première position et une seconde position respectivement pour définir :
un trajet de la couche intermédiaire textile (14) d'interaction avec la section d'ajustement ;
un trajet de la couche intermédiaire métallique (15) de non interaction avec la section d'ajustement.

8. Machine selon la revendication 7 dans laquelle la section d'ajustement de la couche intermédiaire textile comprend un premier poste (3) qui comprend au moins un cylindre d'expansion (31, 32) ayant de préférence un profil courbe, et :
le trajet de la couche intermédiaire textile (14) implique un contact avec un angle d'enroulement souhaité autour dudit au moins un cylindre d'expansion ;
le trajet de la couche intermédiaire métallique (15) est éloigné dudit au moins un cylindre d'expansion.

9. Machine selon la revendication 8 dans laquelle ledit premier poste (3) comprend deux cylindres d'expansion (31, 32) et dans laquelle le trajet de la couche intermédiaire textile (14) et le trajet de la couche intermédiaire métallique (15) passent sur le premier cylindre d'expansion (31) et sous le second cylindre d'expansion (32).

10. Machine selon la revendication 8 ou 9, dans laquelle la section d'ajustement de la couche intermédiaire comprend un deuxième poste de réglage des bords, qui comprend deux dispositifs de réglage des bords (4) respectivement droit et gauche, configurés pour agir sur les bords latéraux de la couche intermédiaire textile, et :
le trajet de la couche intermédiaire textile (14) passe dans une zone de fonctionnement desdits dispositifs de réglage ;
le trajet de la couche intermédiaire métallique (15) passe à une distance au-dessus ou au-dessous de la zone de fonctionnement desdits dispositifs de réglage.

11. Machine selon la revendication 10 comprenant au moins un cylindre déviateur mobile (5) en amont du premier poste et un autre cylindre mobile (6) placé entre le premier poste (3) et le deuxième poste (4) pour définir les trajets du textile et de la couche intermédiaire métallique.

12. Machine selon l'une des revendications 1 à 6 comprenant :
une presse à assembler (13) apte à réaliser une jonction entre la couche intermédiaire textile et la couche intermédiaire métallique ;
un dispositif d'expansion (3) pour étendre la couche intermédiaire textile, de préférence avec des cylindres à axe courbe ;
dans lequel ledit dispositif d'expansion est situé en amont de ladite presse (13) dans la direction de déplacement vers l'avant (A) de la couche intermédiaire.

13. Machine selon l'une des revendications précédentes dans laquelle le trajet de la couche intermédiaire textile et le trajet de la couche intermédiaire métallique sont sensiblement confondus dans la section comprise entre une presse (13) de jonction de la couche intermédiaire textile et de la couche intermédiaire métallique, et le groupe de calandrage (1).

14. Machine selon l'une des revendications précédentes, dans laquelle au moins l'un dudit premier cylindre de pose de fil (9) et dudit deuxième cylindre de pose de fil (10) peut être extrait latéralement, de préférence au moins le deuxième cylindre (10).

15. Machine selon la revendication 14 dans laquelle ledit au moins un cylindre extractible de pose de fil (9, 10) est monté sur des glissières (23, 54) qui permettent l'extraction latérale de celui-ci.

16. Procédé pour passer de la fabrication avec une couche intermédiaire textile (14) à la fabrication avec une couche intermédiaire métallique (15) ou inversement dans une machine combinée selon au moins l'une des revendications précédentes, le procédé comprenant les opérations de :
découpe de la couche intermédiaire en fabrication et réalisation d'une jonction dans la presse (13) avec la nouvelle couche intermédiaire ;
positionnement du premier cylindre de pose de fil (9) pour la couche intermédiaire métallique dans une position active, en cas de passage à la couche intermédiaire métallique, ou dans une position d'attente, en cas de passage à la couche intermédiaire textile, en actionnant un dispositif de positionnement respectif (25, 52);
positionnement du deuxième cylindre de pose de fil (10) de la couche métallique intermédiaire et le cylindre d'insertion (8) de la couche intermédiaire textile en actionnant le support mobile (11) sur lequel les deux dits cylindres (8, 10) sont montés, en déplaçant ledit cylindre de pose de fil (10) dans la position de fonctionnement et ledit cylindre d'insertion (8) vers la position d'attente non opérationnelle, en cas de passage vers la couche intermédiaire métallique, et vice versa en déplaçant ledit cylindre de mise en place du fil vers la position d'attente non opérationnelle et ledit cylindre d'insertion vers la position opérationnelle en cas de passage à la couche intermédiaire textile.
